Europäisches Patentamt

European Patent Office

Office européen des brevets

(19)

(11) **EP 1 355 214 A2**

(12) **EUROPEAN PATENT APPLICATION**

(43) Date of publication:
**22.10.2003 Bulletin 2003/43**

(51) Int Cl.7: **G05D 23/275**

(21) Application number: **03252471.2**

(22) Date of filing: **17.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK SI**

(30) Priority: **17.04.2002 GB 0208788**
**17.04.2002 GB 0208789**

(71) Applicant: **Diamond H Controls Limited**
**Norwich, Norfolk, NR6 6AH (GB)**

(72) Inventor: **Lofthouse, Randolph**
**Norfolk NR20 4NE (GB)**

(74) Representative: **Flynn, Michael Joseph**
**flynn-IP**
**10 Norton Road**
**Loddon**
**Norwich NR14 6JN (GB)**

(54) **A thermal sensor, a method of manufacture and use as a flame failure device**

(57)    A thermal sensor (1,10,20,30,S) comprises first (3,13,23,33) and second (4,14,14a,14b,24,34,37,39) conductors separated by a ceramics material (6,16,26,36,A,B) which is responsive to heat whereby the resistance of the ceramics material undergoes a step change from a first resistance value ($R_{OFF}$), which is the electrical equivalent of an open circuit, at a first temperature range ($T_{OFF}$), consistent with the absence of a flame or applied heat or an acceptable operating level of applied heat, to a second resistance value ($R_{ON}$), which is the electrical equivalent of a short or closed circuit, at a second temperature range consistent ($T_{ON}$) with the presence of a flame or a maximum or near maximum required output of a heating surface or heating element (61). The sensor is mounted on or embedded in a heating surface to be monitored and the sensor conductors are connected to a control device for controlling the temperature of the heating surface. In an alternative arrangement, the sensor (S) is used as a flame failure device. A method for manufacturing a thermal sensor is disclosed in which the profile of the gap between the first and second conductors is determined by screen printing templates or otherwise laying conductor tracks which are etched or laser trimmed as appropriate and overlaying at least the gap with the ceramics material. Control devices (50) of the type including an energising circuit, in which the device includes a thermal sensor connected in various configurations with the energising circuit or the load to be controlled are disclosed, as are interface circuits and energising circuits for connecting the sensor to various control devices and instrumentation.

Fig 4a

EP 1 355 214 A2

**Description**

Field of the Invention

The present invention relates to a thermal sensor for use particularly in temperature control devices. More particularly the invention relates to sensors adapted for use with domestic or commercial heating systems or boilers and to cooking appliance controllers which regulate or otherwise limit the operating temperature of cooker hot plates, hobs, grill, ovens and the like. The invention further relates to a method of manufacturing thermal sensors. The invention yet further relates to a flame failure device and particularly to the fail-safe detection of "flame absence" so that said detection may be acted upon in an appropriate manner.

Background to the Invention

In the description that follows, particular emphasis is directed towards domestic cooking appliances, however, it is to be understood that no restriction to such appliances is to be inferred or taken.

It is well established in the art to utilise temperature dependent mechanisms/circuits in a wide range of equipment. Energy regulators are variable output devices which control the delivery of power to a heating ring or coil normally situated in close proximity to a defined area on a ceramic hob.

It has long been common to utilise temperature-dependent deflection of a bimetallic element to fulfil a regulating function in domestic cookers, for example. The bimetallic element is heated by a heating element in intimate contact with an active leg of the bimetallic element which is housed within the regulator, specifically for that purpose. Typically, the deflection is used to actuate a switch mechanism to open and close electrical contacts for the supply of power to the load. The setting at which the bimetal strip actuates the switch mechanism is determined by a rotary cam arrangement.

The heating element is normally energised through the control device from the same source as that used to power the load, that is, the mains electrical supply. Thus, when the load is energised the heating element begins heating the active leg of the bimetallic element. When the temperature-dependent deflection occurs, the power supply to the load and to the heating element is broken and the heating element cools. When the active leg of the bimetallic element returns to its normal (cold) position, the switching mechanism re-establishes (makes) the circuit bringing the power supply back into connection with the load and the heater. The heater is energised again and so the cycle recommences.

When the regulator is combined with a heater limiter to protect the glass of a ceramic hob top, a further problem occurs when the energy regulator is turned down from full power to control at a high percentage output power level setting, say 70 - 80% of full output. In this arrangement it is feasible to loose a complete cycle or part of the heating cycle as a result of interception from the limiter. For example, where the load is a heating surface on a domestic cooker ceramic hob, the thermal gradient between the load heating element, a limiting device and the top of the heating surface adversely affects the control of the heating surface resulting in cyclic operation and preventing full power input to the load. This often detracts from optimum cooking performance.

Where the control device is an energy regulator for a ceramic hob of a domestic electric cooker, the input power to the hob when the regulator is turned to the "full" position should be 100%. In practice, a hob temperature limiter will prevent full power being attained before safe "top of glass" temperature is reached and results in a cyclic mode of operation. The cycling can occur as much as 200C below the safe top of glass operating temperature, although this figure is dependent on the position of the limiter relative to the hob heating element.

The current state of the art for control of ceramic hotplates utilises an energy regulator in series with a ceramic limiter normally positioned adjacent the cooking element or hob. Use of these mechanisms protect the hob glass from excessive heat and ensure that the working temperature of the individual hob positions is maintained below the temperature at which the hob glass becomes damaged and unsafe. Heat damaged hot plates are costly to repair and/or replace. The limiters are standalone controls, which are expensive to manufacture. A limiter is also fragile and manufacturing wastage is high as are rates of warrantee work. The limiter tends to be difficult to calibrate and sensitive to calibration changes during installation. Manufacturing calibration deviations are in the order of +/- 25C.

It will also be acknowledged by the skilled reader that, in domestic and commercial gas cooking appliances and heating boilers it is essential to have an operational pilot light so that when a gas valve is opened, the inflowing gas will be ignited. Alternatively, when the gas valve is opened an ignition circuit is fired until a flame is detected. In either case, in the absence of a flame, it is necessary for the apparatus to "fail safe", that is, the apparatus must fail in such a way as to default or revert to its safest operational mode or to shut down.

There are many known techniques for detecting the presence or absence of a heat source or the temperature at a particular site, generating a suitable signal and feeding that signal to a control device or control system.

When detecting for the presence of relatively high temperatures of say +500C, those temperatures and an aggressive environment, such as that on a cooker hob or within a flame, removes the most common (and therefore cheapest) high temperature detection schemes from consideration.

The use of resistance wire in such an environment is not particularly suitable and the resultant sensor requires electronic conditioning of a relatively small resistance change in the wire. The resistance changes tend towards a linear characteristic and the small changes with respect to temperature must be amplified to produce a useful voltage change.

Similarly, a thermocouple requires expensive electronic circuitry to amplify small voltage changes to produce a useful output voltage change. Furthermore, thermocouple sensors are in themselves relatively costly sensors.

For flame detection, one alternative is the use of the diodic properties associated with a low cost probe which utilises the diode property of a flame to produce an electric signal. Unfortunately, the electronic circuitry associated with the detector/sensor raises the overall cost.

Firstly, hydraulic expansion of a fluid within a probe is often utilised as a medium cost means for producing a mechanical action. A relatively simple, medium cost mechanical system is then required to convert the fluid expansion (which is small) to an electrical signal. Most often the electrical signal is realised by a switch.

Each of the known systems has disadvantages associated with reliability and cost which are immediately apparent to those skilled in the art.

Calibration of sensors due to manufacturing inconsistencies and the sensitivity of known sensors to components to which they are connected also increases the end costs to a user. Devices which are self-calibrating or can be manufactured to have specific response characteristics are desirous but often unrealisable.

One specific example of a limiter consists of printing heater elements and attaching thermistor sensors and the like onto the under surface of the hob glass. One disadvantage associated with these are reducing insulator properties and falling resistance with rising temperature. Furthermore, by printing heater elements beneath the hob glass the user, overtime, is exposed to a live surface of the hot glass at high temperatures.

A common form of heating element for such a limiter is a ceramic substrate heater. Current methods of making electrical connection to ceramic substrate heaters have shortcomings in maintaining a reliable electrical connection at high ambient temperatures and heater power levels.

A new low cost method of overcoming the technical problems associated with mechanical and electrical connections above has now been developed.

A new form of temperature control device has now been devised which in its various possible forms provides one or more advantages over previously used techniques.

It is a primary object of the present invention to alleviate the major disadvantages associated with known thermal sensors and to provide a family of sensors having improved attributes of connectivity, reliability, repeatability, general robustness and cost.

It is a further object of the invention to provide a method of manufacture of sensors which is of relative low cost, utilises existing technology and is easily manipulated to manufacture a variety and/or range of sensors having differing characteristics.

As a consequence of the improvements to sensors, it is also an object of the present invention to seek to alleviate the disadvantages associated with existing control devices and therefor to provide an improved temperature control device having a reduced part count which is reliable and adaptable for use as a control parameter regulator or limiter.

It is a further object of the present invention to provide a method of maintaining temperature within a cooking appliance and providing a failsafe mechanism to protect the cooking appliance from damage due to excessive heat.

It is a yet further object of the present invention to provide a flame failure device which is robust, reliable and inexpensive.

Summary of the Invention

In its broadest aspect, the present invention provides a thermal sensor comprising first and second conductors, characterised in that the conductors are separated by a ceramics material which is responsive to heat whereby a parameter of the ceramics material undergoes a step change between a first temperature range and a second temperature range. Particularly, it is the resistance of the material which undergoes said step change. Most particularly, the resistance of the material decreases as the temperature increases.

The present invention provides a sensor comprising at least two terminals separated by a ceramics material, the ceramics material has a first resistance value at temperatures consistent with the absence of a flame, the absence of applied heat or the absence of an acceptable operating level of applied heat and a second resistance value in presence of a flame or temperatures consistent with a maximum or near maximum required output of a heating surface or heating element.

Conveniently, in absence of a flame or applied heat, the sensor resistance is the electrical equivalent of an open circuit and, in presence of elevated temperatures corresponding to the presence of a flame or the maximum or near maximum required output, the sensor resistance is the electrical equivalent of a short or closed circuit.

This arrangement provides a sensor which acts effectively as a switch which can be connected within a detector circuit so that in absence of a flame or applied heat, the high resistance of the sensor is electrically equivalent to an open circuit.

Preferably, the sensor is incorporated in a circuit operably connected to an electrical load and, most preferably, the electrical load is a heating element for a heating surface.

It will be appreciated by the skilled addressee that a thermal sensor which results in an open circuit for any fault condition, including absence of a flame or absence of applied heat, is "fail-safe".

Preferably, the sensor in use is operably positioned in close thermal contact with a heat source or heating surface to be monitored for which over-limit temperature is to be monitored.

Advantageously, the sensor is embedded within the heating surface.

In accordance with the invention, there is provided a sensor comprising at least one first conductor is embedded within a ceramics material and at least one second conductor is spaced from the or each first conductor so as to define a conductive gap therebetween. The material bridging said gap has the characteristic or parameter which undergoes a step change between a first temperature range and a second temperature range.

In a preferred construction of sensor the first conductor is a common conductor disposed from at least two second conductors, each second conductor being profiled or positioned to "switch" to or electrically communicate with the common conductor at or near a discrete temperature value.

The discrete temperatures are preferably disparate temperature values. Advantageously, one of values is in the range of 500 - 750C and another is in the range 70 - 150C.

A transition temperature is defined as the temperature range over which the step change from a first temperature range to a second temperature range occurs and is in the region of 100C.

Preferably, the midpoint of the transition temperature is adjustable by conductor and/or conductor path construction and ceramic material selection between 300C and 600C.

Preferably, the ceramic material is a doped glass which begins to conduct within the temperature range of between approximately 350C and 700C.

Additionally or alternatively, a low transition temperature sensor is provided, the low transition temperature being defined as the temperature range over which the step change occurs. The transition temperature in the region of 70 - 120C.

Intermediate temperature sensors may also be provided.

The sensor is advantageously formed on a substrate material upon which at least two conductor pads are affixed and to which electrical connection may be made, at least a portion of each conductor being overlaid with a ceramics material having the requisite characteristic or parameter referred to hereinabove.

Advantageously, the substrate material is part of the heating surface or heater assembly.

The present invention also provides thermal sensor operably coupled to a control device of the type including an energising circuit, the thermal sensor being connected in series with the energising circuit so that in absence of a flame or applied heat, the energising circuit is in the electrical equivalent of an open circuit and the control device cannot be energised and, in the presence of elevated temperatures, the circuit is "made" or closed, allowing the control device to be energised.

Alternatively, the sensor is operably coupled to a control device of the type including an energising circuit, the thermal sensor being connected in parallel with the energising circuit so that, in absence of a flame or applied heat, the control device is energised and, in the presence of elevated temperatures, the energising circuit output is shunted through the sensor and the control device cannot be energised.

Conveniently, the energising circuit includes a switch activating coil which when energised closes a normally open switch. The switch is connected in series with a load which in turn is energised.

The above arrangements, the sensor may be operably coupled to a control device or a standard energy regulator of the type utilising temperature-dependent deflection of a bimetal element which is used to actuate a switch mechanism to open and close electrical contacts for the supply of power to a load. The bimetal element is heated via a heating element mounted to the active leg thereof, whereby energising of the heating element is dependent on the presence or absence of a flame or applied heat at the sensor. In one embodiment, a sensor is connected in series with the energising circuit for the heating element so that in absence of a flame or applied heat at the sensor site, the heating element is inactive and deflection of the bimetal element is prevented. Optionally, the sensor is connected in parallel across the bimetal heating element so that when the sensor is "made" or in closed circuit, power is shunted away from the heating element preventing energisation of the heater circuit. In an alternative arrangement, the sensor is connected in series to the load to be controlled when the control device or energy regulator is in use, thereby obviating the bimetal switch and the heated activation thereof.

In an alternative arrangement, the sensor is connected in series with the energising coil of a relay, so that when the sensor is cool, that is, in the absence of applied heat or an elevated temperature, the normally-open contacts of the relay remain open and when the sensor is hot, that is, at a temperature consistent with a predetermined maximum safe operating heating surface temperature, the coil is energised and the relay contacts are closed.

It will be seen by the skilled reader that a remote sensing apparatus may be implemented utilising the sensor with associated standard interface circuitry. Additionally, a simple low component count circuit interfaces the sensor with most control devices and/or instrumentation.

According to a further aspect of the present invention, a control device comprises a thermal limiter comprising a bimetallic element having an active primary limb on which there is mounted a heating element which is arranged in series connection with a sensor of the type comprising at least two conductors separated by a ceramics material, the ceramics material having a first resistance value associated with a safe thermal range and a second resistance value disparate from the first and associated with an over-limit temperature, the second resistance value being such to effectively form a closed circuit, thereby energising the heating element and deflecting the bimetallic element.

Using this form of construction, ambient compensation is automatically achieved whilst substantially eliminating deflection constant variations.

The design therefore has the advantages of giving optimum compensation, elimination of bimetal constant variation problems and also enabled a low profile design of control to be considered.

It will be appreciated that a reduction in component count may be anticipated for standard control devices and particularly for multi-function or multi-circuit devices.

According to another arrangement of the present invention, the sensor is operably coupled to a control device or energy regulator comprising a bimetallic element, having an active leg on which there is mounted a heating element, the sensor being adapted to drive one or more circuits associated with the heating element, the or each drive circuit and the heating element being in intimate thermal contact with the active leg of said bimetallic element, the or each drive circuit including a sensor element to which there is associated a specific thermal switching function so as to more accurately determine temperature limits associated with an appliance to be controlled.

Advantageously, separate thermal switching functions are effected using multi-circuit arrangements which combine different profiles of conductors and/or different compositions of ceramics material.

Conveniently, the optimised performance of the thermal switching function is set by adjusting any one or more of the composition of ceramic material, the profile of conductors, the profile of the gap between the conductors and the formation of the ceramic material.

The thermal sensors of the invention include multi-circuit arrangements which combine different profiles of conductors and different compositions of ceramics material. In one arrangement parallel gaps are provided which are overlaid with glazes of having different transition temperatures. It will be appreciated also that the sensor terminals defining the gaps need not be opposite one another but may be overlaid to form a layered sensor. A first common conductor may define a gap with a second, for example, planar conductor which is overlaid with the first and separated by a first composition of ceramics material. On top of the second conductor a second composition of ceramics material is laid and a third conductor adhered thereto. Essentially, conductors are overlaid with intervening layers of ceramic material. Terminals connectors are taken from the second and third conductors to realise a multi-circuit sensor.

According to a further aspect of the invention there is provided a unitary temperature control device having multiple circuits each of which are switchable at discrete temperatures.

In a yet further aspect of the present invention there is provided a method of manufacturing a thermal sensor of the type described, the method comprising:

selecting a substrate;

forming at least first and second conductors and associated terminals on the substrate;

defining between the at least first and second conductors, a gap having a predetermined profile;

overlaying at least the gap with a ceramics material which is responsive to heat so that a parameter of said ceramics material undergoes a step change between a first temperature range and a second temperature range; and

firing the ceramics material.

Conveniently, the gap is defined by screen printing a conductive path between, but not connecting, the at least first and second conductors.

Advantageously, the profile of the gap is altered by changing the template used for screen printing the conductive path.

Optionally, a conductive track is laid between the at least first and second conductor terminals, the gap being defined by etching the conductive track.

Conveniently, the conductor terminals and the conductive track are formed concurrently.

According to the invention there is also provided a method of determining when high temperatures have been reached and operating control circuitry to maintain the temperature at a predetermined level or cut off a heat source when the temperature reaches a maximum operational temperature.

The terms "glass" and "ceramics material" as used herein are directed to a vitrified compound having the requisite characteristic to effect the required parameter change between a first temperature range and at least a second temperature range. Examples include doped glass including boro-silicate glass, overglaze and enamel, however, it is to be understood that no limitation is to be implied by the exemplary materials referred to above.

The use of the term "resistance" in respect of the parameter or characteristic which undergoes the "step change" should be taken to comprise the impedance of the ceramics material. The term "resistance" in used for convenience and as an indication of the most relevant component of the material impedance.

Brief Description of the Drawings

The invention will now be described more particularly with reference to the accompanying drawings which show, by way of example only, several arrangements comprising four embodiments of thermal sensor together with illustrations of a method of manufacture and applications of the sensor, including as a flame failure device, in accordance with the invention. In the drawings:

Figures 1a to 1c are elevations of three arrangements of a first embodiment of ceramic encapsulated sensor;

Figures 1d and 1e are elevations of initial arrangements of sensors superseded by the embodiments and arrangements described with reference to Figures 1a to 1c, and Figure 4 and Figures 5a to 5d, respectively;

Figures 2a and 2b are elevations of two arrangements of a second embodiment of sensor comprising ceramic sensor probes;

Figures 2c to 2e are elevations demonstrating the use of the sensor probe of Figure 2b;

Figure 3a is a graph representing the theoretical characteristic resistance of the ceramics material used for the sensors and probes, plotted against temperature;

Figure 3b is a graph representing test results which indicated that the characteristic of Figure 3a is essentially representative of the resistance/temperature relationship;

Figures 4a to 4c show top plan views of three arrangements of thermal sensor in accordance with the third embodiment of the invention;

Figures 5a to 5e show top plan views of alternative arrangements of a fourth embodiment of thermal sensor in which multiple circuits are provided;

Figures 6a to 6d are a graph representing the resistance of a ceramic against temperature of a sensor having two gaps, top plan views of exemplifying two gap sensors and a cross-sectional elevation of a multi-circuit probe sensor, respectively;

Figure 7 illustrates a three stage process for forming a sensor according to the method of the invention;

Figure 8 is a template for drilling and scoring a substrate platter for accommodating ten sensor assemblies;

Figures 9a to 9c are templates or screens for printing conductor pads, conductive tracks and overglaze corresponding to the substrate platter of Figure 8;

Figure 10 is a schematic representation of a flame failure sensor in circuit with an energy regulator; and

Figures 11a to 11c are schematic representations of a flame failure sensor in circuit.

Detailed Description of the Invention

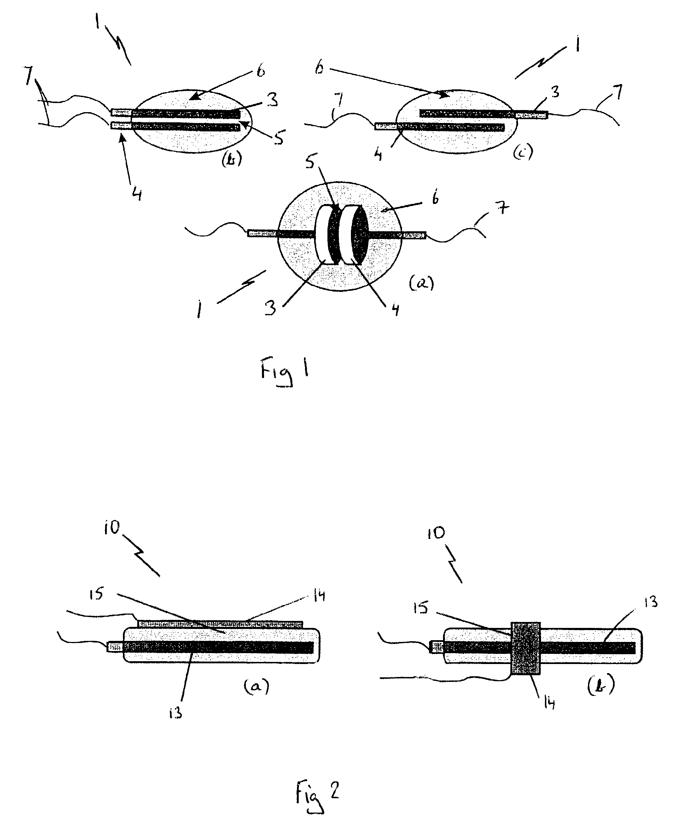

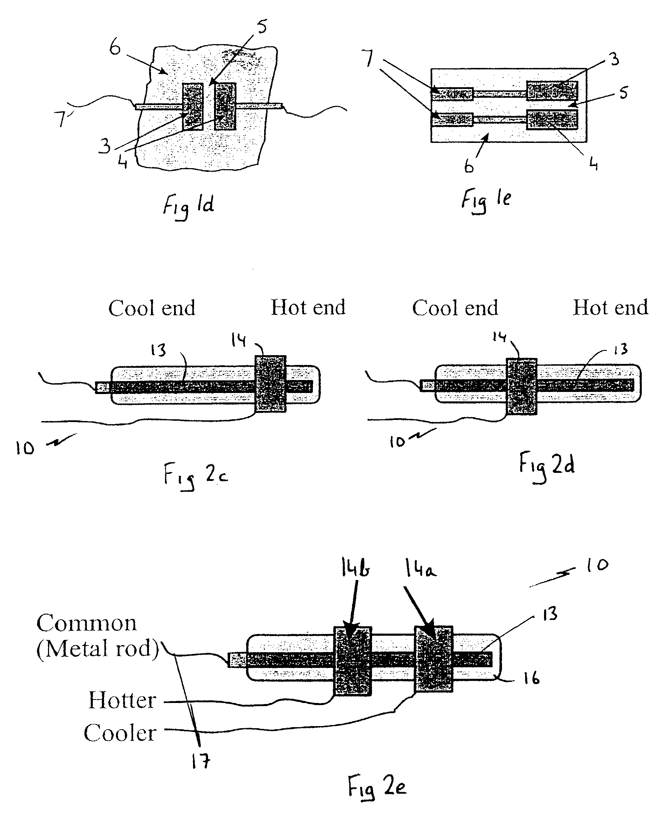

Cooking hobs generally comprise one or more hot zones from which heat is provided. Hot zones are either flame, vitro ceramic surfaces or flattened spiral heating elements.
The rate of change of heat to the relevant hot zone is set by a user rotating a control knob on the cooking appliance corresponding to the hot zone to a desired setting.
Thermal sensors are used to maintain a desired temperature level. The present invention provides this feature and can also be used as a failsafe to protect the appliance that the temperature control device is connected to from reaching a maximum temperature thus enabling working temperatures to be obtained without permanent deformation or damage to the hob glass.
Referring to the drawings and initially to Figures 1a to 1c, a sensor 1 comprises a pair of conductor terminals 3,4 which are separated by a gap 5 filled (and in this case encapsulated) by ceramics material 6. The conductors are coupled to a circuit via wires 7 or leadout tape according to the desired application. In Figure 2a, a sensor is formed as a probe 10 and comprises a first centrally disposed conductor 13 and a second coaxial conductor 14 separated therefrom by a gap 15, the conductor 14 being secured to a body of ceramics material 16 which substantially encapsulates the central conductor 13 to form the probe shape. The probe construction of Figure 2a is particularly suitable for replacing or substituting currently used ceramic hob top limiters which are known to be fragile and break easily usually when a cooking appliance is moved. Retrofitting of this construction is accomplished, for example, by adhering the external terminal conductor 14 to the underside of the ceramic hob top or by placing the probe in existing fittings. The coaxial conductor 14 may be positioned at a predetermined distance along the length of the ceramics body to vary the temperature at which resistivity between the conductors begins to break down. In the probe 10 of Figure 2b, the coaxial conductor 14 is formed as a collar which can be moved along the body of the probe.

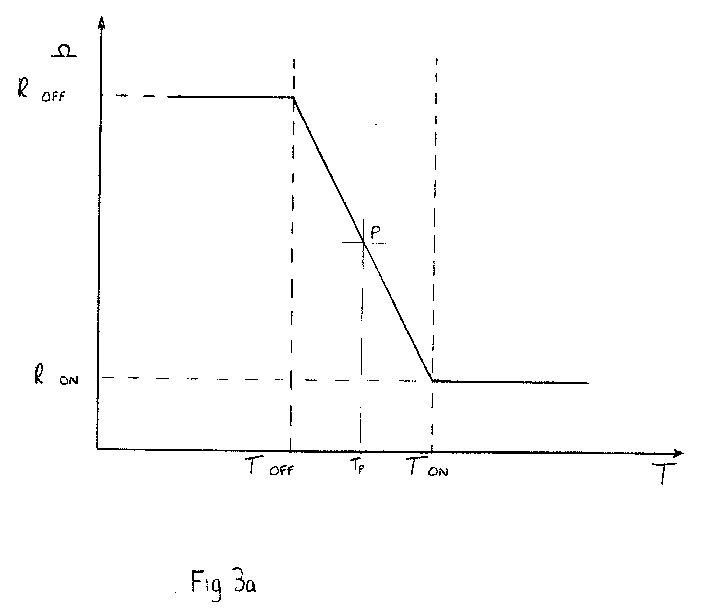

Figure 3a is a graphical representation of the theoretical characteristic of a ceramics material such as glass, including doped glasses and enamel glaze, for example. At a temperature $T_{OFF}$ where many traditional probes and sensor arrangements suffer reliability problems, the ceramic 6,16 of the sensor 1,10 changes state to allow current to flow against a lower resistance $R_{ON}$. The temperature range $T_{OFF}$ - $T_{ON}$ over which the sensor changes from an open circuit $R_{OFF}$ to a low resistance $R_{ON}$ or effectively to a closed circuit is relatively broad, for example, over 100C. The mid-point of this range P can be adjusted by sensor construction, that is, altering the proximity of the sensor conductors, and by appropriate material selection. It is envisaged that the mid-point transition temperature $T_P$ can be adjusted easily between 300C and 750C. Construction modifications and doping of the ceramics material facilitates sensors having transition temperatures in the range 70C to 120C.

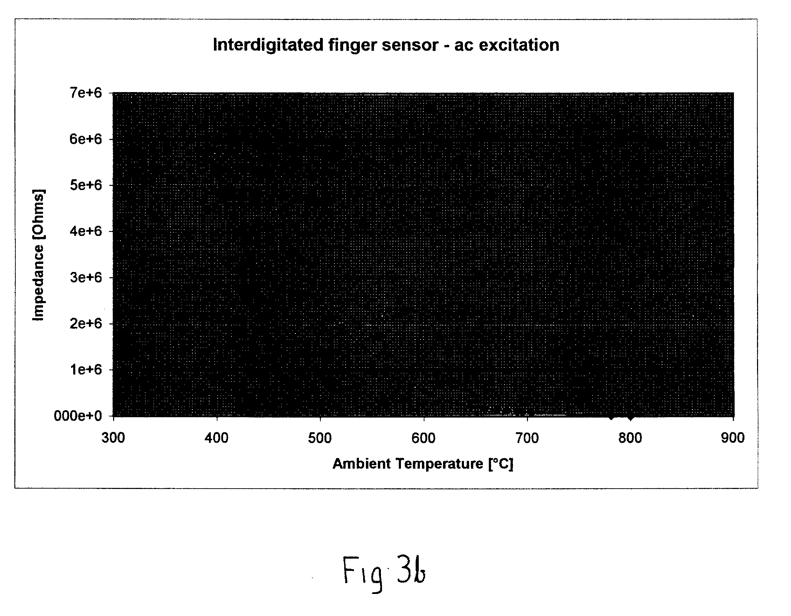

Figure 3b is a typical graph of test results verifying the characteristic of Figure 3a. The graph of Figure 3b was plotted for a sensor construction using an interdigitated pattern such as that illustrated in Figure 4c, below.

The steep, non-linear characteristic curve of the sensor, which can be considered a "step change", is advantageous for thermal regulation or flame detection as the sensor resistance will not reside for long periods in the transition zone intermediate the effective open circuit $R_{OFF}$ and closed circuit $R_{ON}$ conditions. Thus, the sensor acts as a switch, operating in a binary fashion, unlike most of the substantially linear systems acknowledged hereinabove. These systems require an analogue threshold circuit with hysteresis to prevent cycling and to convert the signal from an analogue to a binary form.

The skilled addressee will appreciate that the temperature of a flame has no set or definitive value but will normally lie within the range of 500C to 1000C. Similarly, the maximum temperature to which a cooker hob top can be exposed will normally be within the range 500C to 1000C. Thus, by selecting a sensor which has a mid-point transition temperature $T_P$ of 400C, the sensor will be ideally suited for flame detection. For a hob limiter, a mid-point transition temperature $T_P$ of 600C would be more appropriate. If the temperature in a "normal operating mode" condition is less than the open circuit temperature $T_{OFF}$, which should be no greater than 250C in a domestic oven or central heating boiler, then the resistance between the conductors will be high, resulting effectively in an open circuit $R_{OFF}$. Conversely, when the "normal operating temperature" is exceeded or a flame is present, the temperature of the sensor will rise above 450C at which temperature $T_{ON}$ the resistance between the conductors has fallen away and is effectively a closed circuit $R_{ON}$.

The transition temperature $T_p$ of the thermal sensor of the invention is modifiable by altering the physical characteristics of the conductor terminals or pads and the chemical make-up of the ceramics material. Where the maximum or full range temperature is set at 300C, such as might be encountered in flame temperaturesfor gas appliances in low flow rate or by-pass modes, a mid-point transition temperature of 250C would be required. Where the transition interval ($T_{ON}$ - $T_{OFF}$) is no greater than approximately 50C, a mid-point transition temperature of 275C may be chosen.

The major advantages provided by such a sensor are that it is inexpensive, robust, reliable, easily interfaced with existing control devices and systems and will fail-safe.

In use the ceramic material of the thermal sensor is attached to the underside of a cooking hot plate, for example, in intimate contact with the heat zone. As the hot plate heats up so does the thermal sensor. Thermal agitation increases among the constituent atoms of the ceramic material. As the temperature increases further some of the covalent bonds are broken and thermally generated electrons and spare holes are produced. This activity increases with temperature increases until the ceramic material breaks down switching from an insulator when cold to a conductor when hot due to the movement of holes and electrons within the ceramic material. Current will flow from one conductor to the other conductor when the ceramic material is in this state. The circuitry that the thermal sensor is connected to will now be coupled to an energising source, for example.

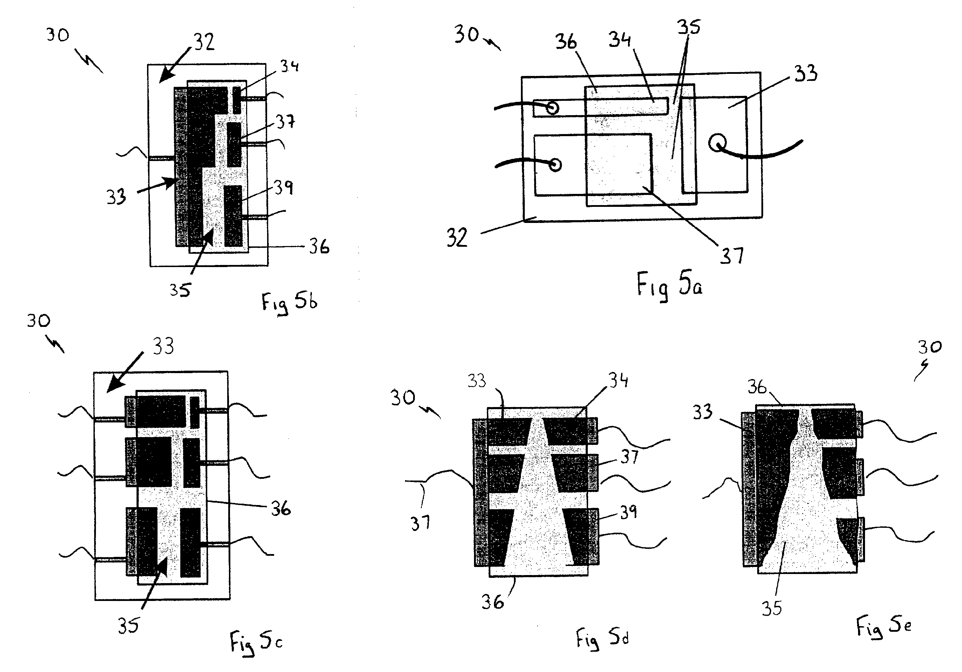

Although not forming part of the prior art, Figure 1d is a precursor sensor arrangement to the sensors illustrated in Figures 1a to 1c. In the arrangement of Figure 1d a conductive pattern formed using a conductive ink or adhering metal pads to a glass surface. A gap is formed between the conductors so that at lower temperatures no current will flow across the gap. At a known temperature the conductivity of the glass increases until the relative conductivity is so low with respect to the lower temperature characteristic that it may be considered a short-circuit or closed switch. The arrangement illustrated in Figure 1e is similar in construction to that shown in Figure 1d but is a precursor to the sensor arrangements illustrated in Figures 4a to 4c and in Figures 5a to 5e. A conductive pattern is formed using screen printing of conductive inks, for example, which includes edge connector pads and a gap defined between the conductive pads of the sensor head. The skilled reader will readily appreciate that the pattern may be formed by known techniques including chemical etching and laser trimming, for example. At a temperature, normally exceeding the maximum operational temperature of a glass hob surface, the resistance across the gap will drop significantly indicating a preselected temperature has been exceeded. In this way, the sensor of Figure 1c forms a temperature dependent switch.

Figures 2c to 2e represent arrangements of the sensor probe 10 of the second embodiment of thermal sensor. In Figure 2c the clamp 14 is positioned adjacent the "hot end" of the probe 10, that is to say, the end of the probe proximate the heat source, usually a hob heating ring comprising the electrical load of a regulator or limiter control device. The temperature at which the sensor conducts will be determined by the relative position of the coaxial conductor or clamp 14. As illustrated in Figure 2d, the clamp 14 is disposed nearer the "cool end" of the probe 10 and thus a higher temperature needs to be established at the heat source before the sensor conducts.

In a further arrangement of sensor probe 10 exemplifying the second embodiment of the invention, a multi-circuit probe facilitates a first switching circuit operating at a cooler temperature via a clamp 14a towards the end proximal the heat source and a second limiting circuit operating at a hotter temperature via a clamp 14b disposed away from the heat source.

A simplified single circuit sensor 20 according to the third embodiment of the invention is shown in Figure 4a. In this arrangement, the thermal sensor 20 comprises a supporting ceramic biscuit 22 on which conductor pads 23,24 are printed. The conductor pads 23,24 are separated by a known distance or gap 25. A ceramic overglaze 26 covers the gap 25 between the pads 23,24 and at least the facing ends of said pads. Leads 27 or leadout tape are attached to the pads by ultrasonic welding, for example.

In use either the substrate or the overglaze portion 26 of the thermal sensor 20 is attached to the underside of a cooking hot plate. The overglaze breakdown characteristic is used to operate the thermal sensor and the associated circuitry as noted above.

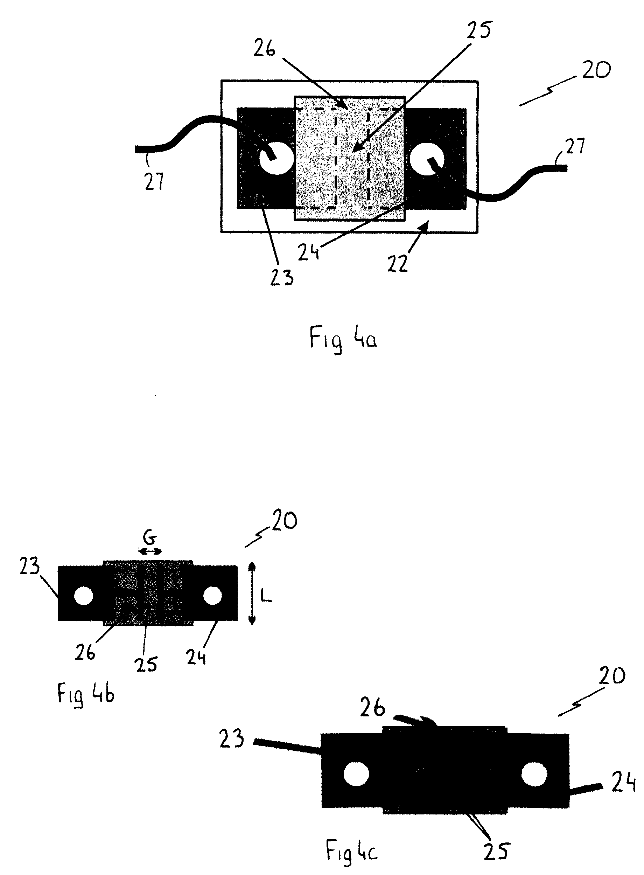

Figure 4b is a sensor equivalent to that shown in Figure 4a in which portions of conductor pads 23,24 have been omitted, either by screen printing the shape illustrated, by exposing the portions to an etchant or by laser trimming. The latter technique is preferred particularly for defining the conductor edges adjacent the gap 25 as a more accurate and smooth finish may be achieved.

The sensor arrangement of Figure 4b is illustrative of the two dimensional structure of the simpler sensors. A non-conducting substrate 22 is provided as a stable base for a pair of conductors 23,24 which is formed or secured thereon. Each conductor includes a connector pad and a portion which together with the corresponding portion of the other conductor defines the gap 25. The gap is overlaid with glaze 26.

With reference back to Figure 3, at any particular temperature, the resistance per square millimetre (mm$^2$) can be determined by inspecting the resistance v temperature curve for the particular glaze or by solving the equation:

$$R(t) = 10^{(a+b/T)}$$

where r(t) = surface resistance at a particular temperature

a & b = constants appropriate to the glaze

T = temperature (Kelvin)

The constants for a Ceran glass for example would be approximately

a = -1.9; b = 4500, for example.

It will be seen that for two conducting surfaces separated by a rectangular gap of width Gmm and length Lmm, the resistance R(t) measured between the conductors at a temperature t, will be:

$$R(t) = r(t) * G/L$$

Thus, a target resistance at a particular temperature (for example, to calculate the mid-point transition temperature $T_p$) can be obtained by modifying the geometry of the gap between the two conductors. At the temperature normally encountered, or where there is a requirement to achieve a low temperature switching function, the sensor resistance is often higher than desired. A sensor design having a geometry to minimise the gap width G and to maximise the gap length L is the inter-digitated pattern sensor illustrated in Figure 4c.

It will be readily appreciated by the skilled reader that where there is close separation of the conductors (electrodes), AC excitation of the circuit is preferred. The use of DC is known to encourage dendric growth of metal spikes between the gaps, which will eventually short the sensor. The use of DC is thought to polarise or align the ceramic material molecules when the material is hot and consequently more fluid. The alignment will be maintained if excitation continues during the cooling phase. This results in a reduced resistance (impedance) of the sensor at temperatures ($T_{OFF}$) where an effective open circuit is required. Where the low temperature resistance is insufficiently high, the sensor is deemed to have failed. This alignment does not occur with AC excitation and such excitation applied during a high temperature heating cycle can reverse the alignment caused by DC excitation, effectively repairing failed sensors.

It will be acknowledged that the gap need not be restricted to a single uniform width. The temperature curve levels off substantially above a certain temperature, indicating a minimum resistance is achieved from a gap despite increasing the temperature further. With reference to Figure 5a, if a sensor 30 has effectively two gaps 35, the first gap, defined between a common terminal 33 and a first tap-off terminal 34, being short and narrow and the second gap, similarly defined between the common terminal 33 and a second tap-off terminal 37, being longer but wider, the first gap will allow current to flow at a lower temperature and the second gap becomes effective at a higher temperature. At the higher temperature, the parallel resistance of the two gaps furthermore lowers the total sensor resistance.

Figures 5b to 5e are further arrangements of a thermal sensor exemplifying a fourth embodiment of the present invention. Referring to Figure 5b, the thermal sensor 30 comprises a supporting ceramic biscuit 32 on which a common conductor 33 and multiple conductor terminals 34,37,39 are printed. The profile of the common conductor 33 and the respective gaps 35 between the common conductor 33 and the other conductor terminals 34,37,39 determine the operating temperatures of the thermal sensor 30 and the operation of the associated circuitry connected to the multiple conductor terminals 34,37,39. A ceramic overglaze 36 covers the facing ends of all conductors 33,34,37,39 and the gaps between them. The arrangement of Figure 5c allows for an isolated multi-circuit sensor to be implemented on a single substrate, each circuit being adapted to switch at a different temperature although overglazed by the same ceramics material.

The arrangements illustrated in Figures 5d and 5e demonstrate that there is no requirement for the gaps to be straight. Furthermore, there is no particular requirement that the gaps are discrete. It will be seen that the non-rectangular gaps of Figures 5d and 5e may be combined to form a single gap of an appropriate variable gap shape.

Laser trimming is utilised to shape the conductors or to modify their profiles to produce the desired characteristic.

In use, the ceramic overglaze 36 is connected proximal to the underside of a cooker hob glass or plate. As the hob heats up so does the overglaze. Placement of the thermal sensor in relation to the heat source of the hot plate effects a switching function at one or more predetermined temperature settings. The ceramic material between the conductors closest to the heat source will undergo thermal agitation before the remaining material. Consequently, the material between the conductor terminals furthest away from the heat source will undergo thermal agitation at a higher temperature than at the preceding two conductor terminals.

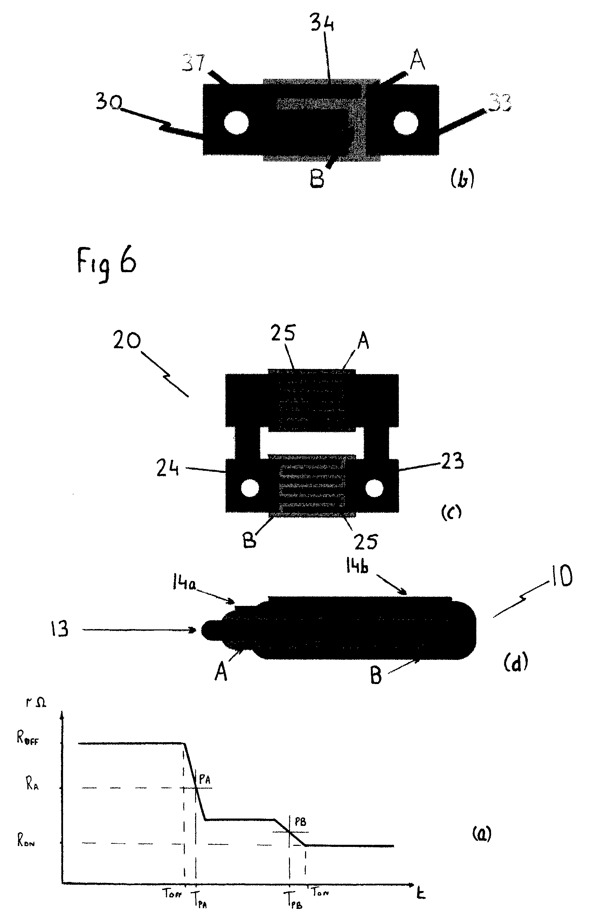

Figure 6a is a graphical representation of the characteristic of a sensor having constructions as illustrated in Figures 6b to 6d. The characteristic is consistent with that obtained by measuring resistance against temperature for a dual gap sensor. However, the characteristic illustrated is also representative of a sensor in which different materials and further levels of overglaze and conductor result in a multi-circuit sensor.

Figure 6b illustrates a parallel arrangement of two sensors similar in construction to the arrangements of the third embodiment of the invention. The sensor 30 has a common conductor 33, a first tap-off portion 34 and a second tap-off portion 37 which is coupled to the first portion 34 to effect the parallel combination. Each tap-off 34,37 has non-identical gaps A,B covered by a common overglaze 36 all mounted on a single substrate (not shown). At lower temperatures (<$T_{OFF}$), the sensor 30 is in open circuit $R_{OFF}$. At a first transition temperature, indicated by the mid-point transition temperature $T_{PA,}$ the first, narrower gap is insufficient to prevent conduction and the sensor resistance falls below the corresponding mid-point transition resistance $R_A$. As the temperature increases beyond the second gap mid-point transition temperature $T_{PB}$, towards the temperature $T_{ON}$ at which the sensor is effectively in closed circuit $R_{ON,}$ it is the parallel configuration of the gaps A,B which establishes the final value of the closed circuit resistance $R_{ON.}$

In Figure 6c, a parallel arrangement of two inter-digitated sensors 20 are combined to take advantage of the different mid-point transition temperature Tp temperatures of different ceramics materials or glazes A,B. A first gap is overlaid with a glaze A and a second parallel gap is overlaid with a glaze B. If glaze A has a lower mid-point transition temperature $T_{PA}$ then the resistance of the sensor will be determined by the single gap closed circuit resistance $R_A$ until the mid-point transition temperature $T_{PB}$ is exceeded at which stage the total sensor resistance will be given by:

$$R_{ON} = (R_A + R_B)/R_A R_B$$

Figure 6d illustrates a probe construction 10 in which a parallel arrangement of gaps A,B are provided to realise a multiple circuit probe sensor, similar to that illustrated in Figure 2e but having a physical construction akin to the probe of Figure 2a.

In use, the sensor is adapted to be positioned in direct thermal contact with a heat source, a heated surface to be regulated or an element having a maximum operating temperature.

Selection of the correct ceramics material, for example, the doping concentration in a lithium glass or a boro-silicate glass will determine the suitability of a sensor for direct thermal contact use. It will be appreciated that certain applications of the invention will not be suited to direct contact of the sensor and that radiated heat or ambient temperature within an enclosure may provide a better indication of correct operation of an appliance. Furthermore, certain sensor constructions are mountable on the surface of an enclosure and regulation or maximum temperature limiting may be realised by measuring the temperature, for example, on the outer surface of an enclosure wall or an observation window.

The sensor is conveniently incorporated into mains voltage circuits, lower voltage circuits (say 24V) and logic level (5V) circuits and it will be appreciated that a sensor may be interfaced to a detection circuit, an energising circuit or a load in series or in parallel according to the intended use or switching function. Similarly, combinations of series and parallel connections may be used to realise separate functions within an appliance. Logic circuit interfaces are facilitated by combinations of sensors to implement, for example, an OR or EXCLUSIVE-OR circuit.

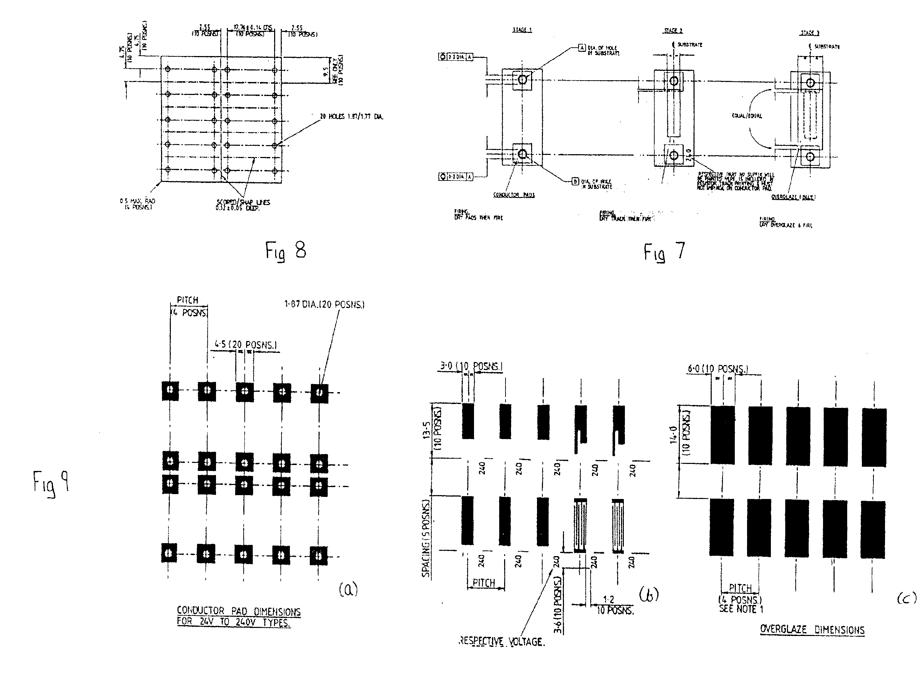

Referring now to Figure 7, a three stage process for forming sensors such as those illustrated in Figures 4a to 4c and Figures 5a to 5e, for example, as described with reference to a single track or circuit. However, it will be understood that the principles apply identically to the formation of such sensors having multiple circuits thereon. The substrate is pre-drilled prior to the printing of a pair of conductor pads which are subsequently dried and fired. A conductive track of a pre-determined length or pattern is then printed between the conductor pads, overlapping at one end a pre-determined area with one of the pads to ensure electrical connection. The conductive track may be printed to overlap both conductive pads in such cases where the track is subsequently laser trimmed to create a gap. At the same time the conductive track is laid, a part identity number is printed proximal to but not impinging on the conductor pad. When the track has been dried and fired, an overglaze is screened onto the assembly to protect the track and the overlap region while leaving the majority of the conductor pads available for connection via rivet or leadout tape, fixed appropriately, for example by ultrasonic welding.

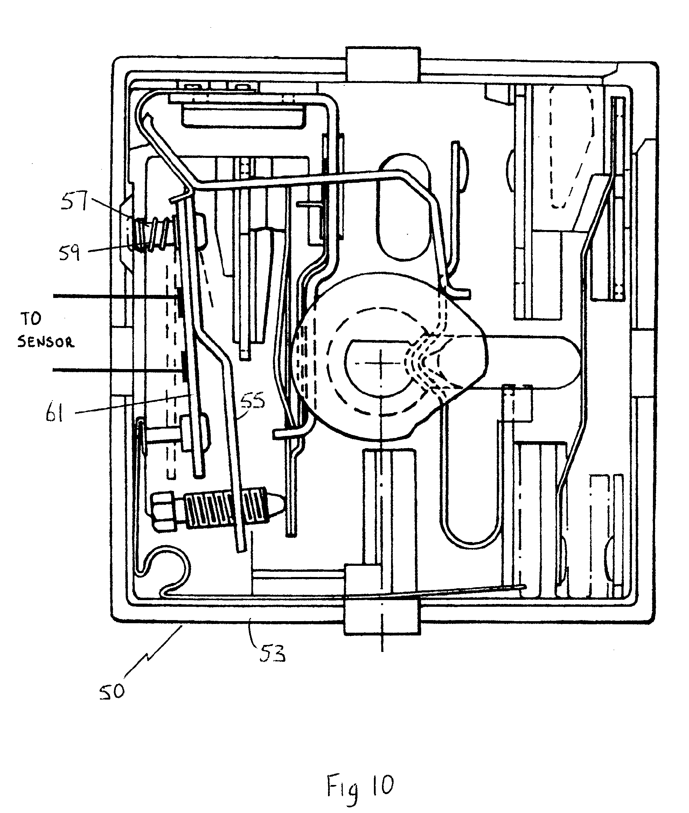

With reference to Figures 8 and 9a to 9c, the sensor circuits are normally made in batches of not less than 10. As shown in Figure 8, a substrate platter is pre-drilled with a pair of holes on each individual substrate and score lines are cut into the platter to aid subsequent separation of the completed sensors. The pitch and position of the conductor pads are set out in a screen or template as shown in Figure 9a and corresponding screens or templates for printing the conductive tracks and overglaze are illustrated in Figures 9b and 9c, respectively.

In Figure 9b, different track layouts are shown by way of illustration. A first three tracks are illustrated having short track lengths to produce a relatively large gap. A second three tracks below the first three referred to above are printed so as to form a short gap. It will be understood that any screen printing template used in the method of the invention would normally feature only one layout. A pair of parallel sensor layout tracks consistent with the sensor arrangement of Figure 6b is illustrated also together with a pair of inter-digitated sensor tracks of the type shown in Figure 4c. The above arrangement allows a single element, that is, the printing screen, to dictate the sensor arrangements made by the described method.

Figure 10 is a schematic diagram of an energy regulator 50 comprising a base 53 in which the constituent parts of the regulator are housed. The main part of the regulator comprises a bimetal leg 55 to which a substrate thick film heater assembly 61 is secured by means of an eyelet 57 and a surrounding coil spring 59. The further detail of the construction of the regulator may be found in the exemplifying disclosure of EP 0 682 352 which is incorporated herein by reference.

In the control circuit of the regulator there is provided a basic single circuit connection through a heater assembly, secured to the active leg of a bimetallic element, and a flame failure sensor. In this arrangement, a load which may comprise, for example, an electric gas valve is coupled to mains electrical supply through a switch actuated by the bimetallic element. A heating element is mounted to an active leg of the bimetallic element so that at a predetermined temperature of the heater the bimetallic element deflects to actuate the switch.

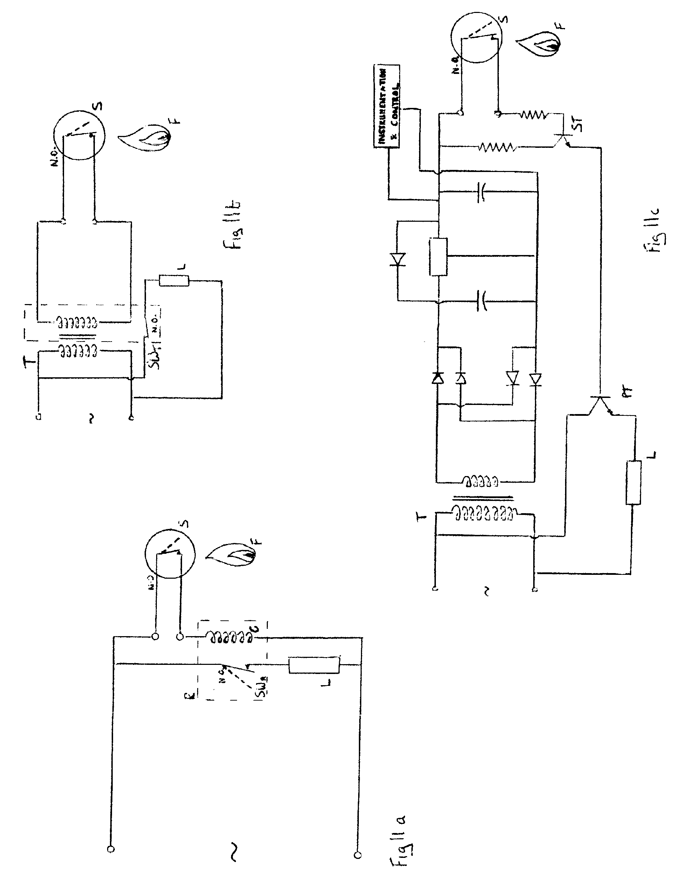

With reference to Figures 11a to 11c, a number of possible circuit arrangements will be described beyond that of the simple arrangement whereby the load is connected in series with the flame failure switch. Figure 11 a is a schematic circuit diagram of a flame failure sensors in series with the energising coil C of a relay R. The relay contacts form a switch $SW_R$ which may be connected to any one of a number of devices or controllers and are normally associated with the actuation or energising of a load L. In the presence of a flame F, the normally-open (N.O.) sensor S short circuits energising the relay coil C. This in turn magnetically attracts the blade of the switch $SW_R$ to make the circuit powering the load L.

Figure 11b is a schematic circuit diagram substantially similar to that illustrated in Figure 11a, in this case however the sensor S is isolated from the mains voltage through a transformer T. One side of the transformer (or another series connected coil winding) acts as a relay coil to make the normally-open circuit powering the load L when a flame F causes the sensor S into the low resistance $R_{ON}$ portion of its characteristic and facilitating the flow of induced current in the secondary winding of the transformer T. When current flows, the necessary magnetic field to attract the switch $SW_T$ blade is established.

Finally, with reference to Figure 11c, a schematic circuit diagram of a circuit having a power supply for additional instrumentation and control is illustrated. The mains voltage is stepped-down across a transformer T where it is rectified and regulated for the instrumentation and controls system feed. The sensor is connected across the collector and base of a switching transistor ST so that when a flame F is present, the base current is increased, switching on the transistor and in turn providing base or gate current to a semiconductor power switch PT in the circuit containing the load L. In absence of a flame F, the sensor temperature drops below that corresponding to the high resistance $R_{OFF}$ part of the ceramic sensor characteristic. Below this temperature $T_{OFF}$, the sensor is in effect in an open circuit mode. This cuts off the switching transistor ST base current and the transistor turns OFF. Thus, the base or gate current to the power switch PT is cut off and the load is isolated from the mains supply.

The skilled reader will appreciate that the semiconductor power switch PT may be a triac or any other suitable bi-directional device. In an alternative construction the power switch PT may be optionally isolated from the low voltage side of the circuit.

In use, the flame failure device comprises a sensor which is positioned within the ordinary path of a flame. The sensor may then be used to detect the presence or absence of a pilot flame, for example.

Selection of the correct ceramics material, for example, the doping concentration in a lithium glass or a boro-silicate glass will determine the suitability of a sensor for in flame use. It will be appreciated that certain applications of the invention will not be suited to in flame positioning of the sensor and that radiated heat or ambient temperature within an enclosure may provide a better indication of correct operation of an appliance. Furthermore, certain sensor constructions are mountable on the surface of an enclosure and flame detection may be realised by measuring the temperature, for example, on the outer surface of an enclosure wall or an observation window.

The circuit arrangements shown herein are given by way of example and it will be appreciated that a sensor may be interfaced to a detection circuit, an energising circuit or a load in series or in parallel according to the intended use or switching function. Similarly, combinations of series and parallel connections may be used to realise separate functions within an appliance. Logic circuit interfaces are facilitated by combinations of sensors to implement, for example, an OR or EXCLUSIVE-OR circuit.

In the light of this disclosure, modification of the described embodiments, as well as other arrangements, will now become apparent to persons skilled in this art.

It will of course be understood that the invention is not limited to the specific details described herein, which are given by way of example only, and that various modifications and alterations are possible within the scope of the appended claims.

**Claims**

1. A thermal sensor comprising first and second conductors, **characterised in that** the conductors are separated by a ceramics material which is responsive to heat whereby a parameter of the ceramics material undergoes a step change between a first temperature range and a second temperature range.

2. A thermal sensor as claimed in claim 1, **characterised in that** the ceramics material has a first resistance value at temperatures consistent with the absence of a flame, the absence of applied heat or the absence of an acceptable operating level of applied heat and a second resistance value in presence of a flame or temperatures consistent with a maximum or near maximum required output of a heating surface or heating element.

3. A thermal sensor as claimed in claim 2, **characterised in that**, in absence of a flame or applied heat, the sensor resistance is the electrical equivalent of an open circuit and, in presence of elevated temperatures corresponding to the presence of a flame or the maximum or near maximum required output, the sensor resistance is the electrical equivalent of a short or closed circuit.

4. A thermal sensor as claimed in any one of claims 1 to 3, **characterised in that** the sensor is incorporated in a circuit operably connected to an electrical load, the electrical load being a heating element for a heating surface.

5. A thermal sensor as claimed in any one of the preceding claims, **characterised in that** the sensor in use is operably positioned in close thermal contact with a heat source or heating surface to be monitored.

6. A thermal sensor as claimed in any one of the preceding claims, **characterised in that** at least one first conductor is embedded within a ceramics material and at least one second conductor is spaced from the or each first conductor so as to define a conductive gap therebetween.

7. A thermal sensor as claimed in claim 6, **characterised in that** the first conductor is a common conductor disposed from at least two second conductors, each second conductor being profiled or positioned to "switch" to or electrically communicate with the common conductor at or near a discrete temperature value.

8. A thermal sensor as claimed in claim 7, **characterised in that** the discrete temperature values are disparate temperatures values, one being in the range of 500 - 750C and another being in the range 70 - 150C, each range having a transition temperature being defined as the temperature range over which the step change from a first temperature range to a second temperature range occurs and is in the region of 100C, the midpoint of the transition temperature being adjustable by conductor and/or conductor path construction and ceramic material selection between 300C and 600C.

9. A thermal sensor as claimed in any one of the preceding claims, **characterised in that** the ceramic material is a doped glass which begins to conduct within the temperature range of between approximately 350C and 700C.

10. A thermal sensor as claimed in any one of the preceding claims, **characterised in that** the sensor is operably coupled to a control device of the type including an energising circuit, the thermal sensor being connected in series with the energising circuit so that in absence of a flame or applied heat, the energising circuit is in the electrical equivalent of an open circuit and the control device cannot be energised and, in the presence of elevated temperatures, the circuit is "made" or closed, allowing the control device to be energised.

11. A thermal sensor as claimed in claim 10, **characterised in that** the energising circuit includes a switch activating coil which when energised closes a normally open switch, the switch being connected in series with a load which in turn is energised.

12. A thermal sensor as claimed in any one of the preceding claims, **characterised in that** the sensor is operably coupled to a control device or energy regulator of the type utilising temperature-dependent deflection of a bimetal element which is used to actuate a switch mechanism to open and close electrical contacts for the supply of power to a load, the bimetal element being heated via a heating element mounted to the active leg thereof, whereby energising of the heating element is dependent on the presence or absence of a flame or applied heat at the sensor.

13. A thermal sensor as claimed in claim 12, **characterised in that** the sensor is connected in parallel across the bimetal heating element so that when the sensor is "made" or in closed circuit, power is shunted away from the heating element preventing energisation of the heater circuit.

14. A thermal sensor as claimed in any one of the preceding claims, **characterised in that** the sensor includes an interface circuit facilitating the connection of the sensor with remote sensing apparatus, with most common control devices and/or instrumentation.

15. A thermal sensor as claimed in any one of the preceding claims, **characterised in that** the sensor is operably coupled to a control device or energy regulator comprising a bimetallic element, having an active leg on which there is mounted a heating element, the sensor being adapted to drive one or more circuits associated with the heating element, the or each drive circuit and the heating element being in intimate thermal contact with the active leg of said bimetallic element, the or each drive circuit including a sensor element to which there is associated a specific thermal switching function so as to more accurately determine temperature limits associated with an appliance to be controlled.

16. A thermal sensor as claimed in claim 15, **characterised in that** separate thermal switching functions are effected using multi-circuit arrangements which combine different profiles of conductors and/or different compositions of ceramics material.

17. A thermal sensor as claimed in claim 15 or claim 16, **characterised in that** the optimised performance of the thermal switching function is set by adjusting any one or more of the composition of ceramic material, the profile of conductors, the profile of the gap between the conductors and the formation of the ceramic material.

18. A method of manufacturing a thermal sensor, the method comprising:

> selecting a substrate;

> forming at least first and second conductors and associated terminals on the substrate;

> defining between the at least first and second conductors, a gap having a predetermined profile;

> overlaying at least the gap with a ceramics material which is responsive to heat so that a parameter of said ceramics material undergoes a step change between a first temperature range and a second temperature range; and

> firing the ceramics material.

19. A method of manufacturing a thermal sensor as claimed in claim 18, **characterised in that** the or each gap is defined by a conductive track which is laid between the at least first and second conductors, the profile of the gap being defined by a formation technique selected from screen printing, where alteration of the track may be effected by changing a screen printing template, etching and laser trimming, amongst others.

20. A thermal sensor substantially as herein described, with reference to and as shown in the accompanying drawings; a flame failure device incorporating a thermal sensor substantially as herein described, with reference to and as shown in the accompanying drawings; a control device or energy regulator substantially as herein described, with reference to and as shown in Figure 10 of the accompanying drawings; an interface circuit or an energising circuit of a control device or energy regulator substantially as herein described, with reference to and as shown in Figures 11a to 11c of the accompanying drawings; a method of manufacturing a thermal sensor substantially as herein described, with reference to

**EP 1 355 214 A2**

and as shown in Figures 8 to 9c of the accompanying drawings.

Fig 1

Fig 2

6   5

7

*Fig 1d*

3
4

7   3
5
4
6

*Fig 1e*

Cool end          Hot end

13          14

10

*Fig 2c*

Cool end          Hot end

14          13

10

*Fig 2d*

14b    14a          10

13

Common
(Metal rod)

16

Hotter

Cooler

17

*Fig 2e*

Fig 3a

EP 1 355 214 A2

**Interdigitated finger sensor - ac excitation**

Fig 3b

Fig 4a

Fig 4b

Fig 4c

Fig 5a

Fig 5b

Fig 5c

Fig 5d

Fig 5e

34

37

30

A

33

B

(b)

Fig 6

20

25

A

24

23

B

25

14a

14b

10

13

A

B

(d)

r Ω

R$_{OFF}$

R$_A$

PA

R$_{ON}$

PB

T$_{OFF}$  T$_{PA}$

T$_{PB}$  T$_{ON}$

t

(a)

Fig 7

Fig 8

Fig 9

CONDUCTOR PAD DIMENSIONS
FOR 24V TO 240V TYPES.

(a)

RESPECTIVE VOLTAGE.

(b)

OVERGLAZE DIMENSIONS

(c)

57

59

TO
SENSOR

61

55

53

50

Fig 10

Fig 11b

Fig 11c

Fig 11a